# EUROPEAN PATENT SPECIFICATION

(11) **EP 4 019 831 B1**
(45) Date of publication and mention of the grant of the patent: **10.09.2025**
(21) Application number: 20892174.2
(22) Date of filing: 30.10.2020
(51) Int. Cl.: F21S 41/148, F21S 41/39, F21S 41/19, F21S 45/47, F21S 41/47, F21V 17/10, F21V 14/02, B60Q 1/04, B60Q 1/26, F21W 107/10, F21W 102/155

(54) **VEHICLE LAMP MODULE, VEHICLE LAMP AND VEHICLE**
FAHRZEUGLEUCHTENMODUL, FAHRZEUGLEUCHTE UND FAHRZEUG
MODULE DE PHARE DE VÉHICULE, PHARE DE VÉHICULE ET VÉHICULE

(30) Priority: 30.11.2019 CN 201911208408
(43) Date of publication of application: 29.06.2022
(73) Proprietor: Hasco Vision Technology Co., Ltd., Jiading District Shanghai 201821 (CN)
(72) Inventor: LIU, Yang, Shanghai 201821 (CN); ZHU, He, Shanghai 201821 (CN); SANG, Wenhui, Shanghai 201821 (CN); CHEN, Zhaoyu, Shanghai 201821 (CN); HE, Shiqun, Shanghai 201821 (CN)
(74) Representative: SSM Sandmair
(86) International application number: PCT/CN2020/125028
(87) International publication number: WO 2021/103923

(56) References cited:
- EP-A2- 2 395 279
- WO-A1-2012/145056
- CN-A- 101 266 029
- CN-A- 106 439 678
- CN-A- 111 486 407
- DE-A1- 102017 104 841
- JP-A- 2014 007 106
- JP-A- 2016 007 911
- US-A1- 2015 266 407
- US-A1- 2017 146 211
- US-A1- 2017 234 503
- US-A1- 2017 248 287
- US-A1- 2017 370 550

## Description

### TECHNICAL FIELD

The invention relates to a lighting device, in particular to a vehicle lamp module. In addition, the invention further relates to a vehicle lamp including the vehicle lamp module and a vehicle including the vehicle lamp.

### BACKGROUND

Along with gradual maturation and stability of development of the vehicle industry, vehicle lamp modules are more and more diversified, and customers put forward more and higher requirements on comprehensive performance of the vehicle lamp modules, such as light form effect, module manufacturing cost and service life. As one of the vehicle lamp modules, the reflective vehicle lamp module adopts a reflector as an optical element of the vehicle lamp module, and has very high requirements on the positioning and mounting precision of all components.

A vehicle headlamp is disclosed in the Chinese patent CN108061277A, a reflective vehicle lamp module is required to be protected, the reflective vehicle lamp module includes a reflection unit, a light source unit and a heat release component, and the reflection unit and the heat release component are fixed in a matched and riveted mode through heat release component fixing ribs and heat release component fixing sockets. The light source unit, the reflecting unit and the heat release component are fixed in a matched and riveted mode through inserting light source unit fixing ribs into light source unit fixing sockets and light source unit fixing ribs insertion holes.

The American patent US20180112844A1 discloses a vehicle lamp and also requires to protect a reflective vehicle lamp module, the reflective vehicle lamp module includes a reflector, a light shield, a circuit board and a radiator, a positioning plug is arranged on the radiator, the circuit board and the reflector are respectively provided with a positioning socket for the positioning plug to pass through, the positioning plug and the positioning socket are matched to position the circuit board, the reflector and the radiator, and the light shield is welded on the circuit board.

Optical elements (a reflector and a circuit board provided with a light source) in the two patents are positioned through an indirect component, namely a radiator, and due to the fact that manufacturing errors and assembly errors exist among the components, the positioning precision is low, the precision of an optical system is influenced, and then the light form effect is influenced.

The effect of an opening in the patent CN108061277A is the same as that of a light shield in the patent US20180112844A1, a light-emitting element is exposed from the opening, the opening is arranged on a base part, namely, the base part has the light shielding effect, but the base part and a reflecting unit are integrally arranged, and the base part and a reflector main body are both made of resin, so that the heat resistance of the base part is very low, and the service life of the base part is influenced.

In addition, the relative positions of light forms formed by the three reflectors in the patent CN108061277A and the patent US20180112844A1 cannot be adjusted, no dimming structure exists in the patent CN108061277A, and in the patent US20180112844A1 the radiator and the circuit board are both integrated pieces and do not have the dimming function. As a result, the cut-off lines of the main low-beam light form and the auxiliary low-beam light form cannot be aligned, and the relative positions of the low-beam light form and the high-beam light form are easy to deviate, so that the cut-off lines of the light forms are not good, the light form effect is influenced, and the requirements of laws and regulations are not met.

DE102017104841A1 discloses a lighting device for vehicles, in which the light source is fastened at a reference alignment position relative to the optical device reflector, and the circuit board carrying the light source is fastened to the reference alignment position between the contact surface of the reflector and the contact surface of the radiator by fastening screws; However, there is no design of a light shield in this technical solution, nor is there a positioning structure between the light shield and the circuit board, and the dimming formed by the reflector and the circuit board is prone to deviation.

### SUMMARY

On the first aspect, the problem to be solved by the present invention is to provide a vehicle lamp module, the vehicle lamp module adopts a direct positioning mode, the positioning precision is improved, and the light form effect is ensured.

On the second aspect, the technical problem to be solved by the invention is to provide a vehicle lamp which adopts a direct positioning mode, so that the positioning precision is improved, and the light form effect is ensured.

Furthermore, the technical problem to be solved by the invention is to provide a vehicle, the vehicle lamp of the vehicle adopts a direct positioning mode, the positioning precision is improved, and the light form effect is ensured.

In order to achieve the above objective, on one hand, the invention provides the vehicle lamp module, the vehicle lamp module includes a plurality of reflectors, a plurality of circuit boards which are in one-to-one correspondence with the reflectors and light shields in one-to-one correspondence with the reflectors, wherein a plurality of light shield positioning plugs are arranged on the light shield; and light shield positioning sockets corresponding to the light shield positioning plugs are arranged in the circuit board so as to realize direct positioning of the light shield and the circuit board;
one of the reflectors is provided with a plurality of reflector positioning plugs, and the circuit board corresponding to this reflector is provided with reflector positioning sockets corresponding to the reflector positioning plugs to realize direct positioning of the reflector and the circuit board; and dimming structures enabling the other reflectors to move relative to the other corresponding circuit boards are arranged between said other reflectors and their corresponding circuit boards in order to adjust the light distributions in the up-and-down direction;
wherein either the plurality of reflectors or the plurality of circuit boards are integrally formed, wherein
when the plurality of reflectors are integrally formed, the plurality of circuit boards are mutually separated and independent, and the dimming structure enables the said other corresponding circuit boards to move relative to their corresponding reflectors;
when the plurality of reflectors are mutually separated and independent, the plurality of circuit boards are integrally formed, and the adjustment structure enables the said other reflector to move relative to its corresponding circuit board.

The invention is as defined in claim 2, two light shield positioning plugs are arranged on each light shield.

The invention is as defined in claim 3, first through holes for the light shield positioning plugs to pass through are arranged in a radiator corresponding to the circuit board, and the light shield positioning plug is not in contact with an inner wall of the first through hole; and / or
heat-conducting glue is arranged between the light shield positioning plug and the circuit board.

The invention is as defined in claim 4, two reflector positioning plugs are arranged on said one of the reflectors; and / or
second through holes for the reflector positioning plugs to pass through are arranged in the radiator corresponding to the circuit board, and the reflector positioning plugs are not in contact with the inner wall of the second through hole.

The invention is as defined in claim 5, the dimming structure comprises at least one guide column arranged on a bottom face of each of the other reflectors and circuit board guide holes which are arranged in the corresponding circuit board and correspond to the guide columns, and the circuit board guide holes extend in the front-back direction of the circuit boards.

The invention is as defined in claim 6, the outer side edge of the guide column is in contact with the inner wall of the circuit board guide hole, and the inner side edge of the guide column is not in contact with the inner wall of the circuit board guide hole.

The invention is as defined in claim 7, the guide columns are cylinders, one guide column is arranged on one side of each of the other reflectors, two guide columns are arranged on the other side of each of the other reflectors, and the outer side edges of the two circuit board guide holes corresponding to the two guide columns located on the same side are located on the same straight line.

The invention is as defined in claim 8, radiator guide holes corresponding to the circuit board guide holes are arranged in the radiator corresponding to the circuit board, and the guide columns sequentially pass through the circuit board guide holes and the radiator guide holes.

The invention is as defined in claim 9, at least one light shield riveting column is arranged on the light shield, circuit board connecting holes corresponding to the light shield riveting columns are arranged in the circuit board, radiator connecting holes corresponding to the light shield riveting columns are arranged in the radiator corresponding to the circuit board, and the light shield riveting columns sequentially pass through the circuit board connecting holes and the radiator connecting holes to rivet the light shield, the circuit board and the radiator.

The invention is as defined in claim 10, heat-conducting glue is arranged between the light shield riveting column and the circuit board.

The invention is as defined in claim 11, gaps allowing the light shield riveting columns to move in the connecting holes exist between the outer surfaces of the light shield riveting columns and the inner surfaces of the circuit board connecting holes and the radiator connecting holes.

The invention is as defined in claim 12, mounting holes are arranged in the reflector, the circuit board and the radiator corresponding to the circuit board are respectively provided with via holes, and the via holes are connected with the mounting holes through fasteners to enable the fixed connection among the radiator, the circuit board and the reflector.

The invention is as defined in claim 13, a first convex rib protruding out of the lower surface of the reflector is arranged on the periphery of the mounting hole, and the first convex rib is in contact with the upper surface of the circuit board.

The invention is as defined in claim 14, a reflector riveting column is arranged on the lower surface of the reflector, and a riveting hole matched with the reflector riveting column is arranged in the circuit board;

Preferably, a second convex rib is arranged on the periphery of the reflector riveting column, and the second convex rib is in contact with the upper surface of the circuit board.

On the second aspect, the invention further provides a vehicle lamp. The vehicle lamp includes the above-mentioned vehicle lamp module.

Through the above technical solution, the invention has the following beneficial effects:
1. The circuit board is taken as a reference, the light shield and the reflector are respectively and directly positioned with the circuit board, accurate and good positioning among vehicle lamp optical element systems consisting of the circuit board, the light shield and the reflector is realized, the radiator only plays a role in heat dissipation and does not play a role in positioning, and position errors caused by indirect positioning between the optical elements due to the fact that the radiator serves as a positioning piece are avoided, the light form effect is guaranteed, and the module performance is improved;
2. In order to be matched with a positioning structure, the light shield, the circuit board and the radiator are connected in a riveting manner, so that reliable connection is ensured; and
3. A dimming structure is arranged, so that the relative positions of a plurality of light forms in the up-and-down direction can be adjusted, the light forms meet the requirements of laws and regulations, and the light form effect is ensured.

### BRIEF DESCRIPTION OF THE DRAWINGS

Fig. 1 is a three-dimensional structure schematic diagram of one embodiment of the reflective vehicle lamp module in the present invention;
Fig. 2 is a front view of Fig. 1;
Fig. 3 is a top view of Fig. 1;
Fig. 4 is one decomposition schematic diagram of Fig. 1;
Fig. 5 is another decomposition schematic diagram of Fig. 1, wherein the support is not shown;
Fig. 6 is a schematic diagram of the assembly structure of the light shield, the circuit board and the radiator in the present invention;
Fig. 7 is a structure schematic diagram of Fig. 6 from another angle;
Fig. 8 is a front view of Fig. 6;
Fig. 9 is a top view of Fig. 6;
Fig. 10 is a bottom view of Fig. 6;
Fig. 11 is an A-A profile schematic diagram of Fig. 10;
Fig. 12 is a B-B profile schematic diagram of Fig. 10;
Fig. 13 is a C-C profile schematic diagram of Fig. 10;
Fig. 14 is a structural diagram of the reflector in the present invention;
Fig. 15 is an amplified schematic diagram at D in Fig. 14;
Fig. 16 is an amplified schematic diagram at E in Fig. 14;
Fig. 17 is a schematic diagram of the assembly structure of the reflector, the light shield, the circuit board and the radiator in the present invention;
Fig. 18 is a bottom view of Fig. 17;
Fig. 19 is an amplified schematic diagram at F in Fig. 18;
Fig. 20 is an amplified schematic diagram at G in Fig. 19;
Fig. 21 is an amplified schematic diagram at H in Fig. 19;
Fig. 22 is a main low-beam light form schematic diagram correspondingly formed by the main low-beam reflector in the present invention;
Fig. 23 is an auxiliary low-beam light form schematic diagram correspondingly formed by the auxiliary low-beam reflector in the present invention;
Fig. 24 is a low-beam light form schematic diagram (superposition of main low-beam and auxiliary low-beam) of the reflective vehicle lamp module in the present invention;
Fig. 25 is a high-beam light form schematic diagram correspondingly formed by the high-beam reflector in the present invention; and
Fig. 26 is a vehicle lamp light form schematic diagram (superposition of low-beam and high-beam) of the reflective vehicle lamp module in the present invention.

### Description of Reference Signs

| | | | |
|---|---|---|---|
| 1 | reflector | 11 | reflector positioning plug |
| 12 | mounting hole | 13 | first convex rib |
| 14 | reflector riveting column | 15 | second convex rib |
| 16 | guide column | 2 | light shield |
| 21 | light shield positioning plug | 22 | light shield riveting column |
| 3 | circuit board | 31 | light shield positioning socket |
| 32 | circuit board connecting hole | 33 | reflector positioning socket |
| 34, 44 | via hole | 35 | riveting hole |
| 36 | circuit board guide hole | 4 | radiator |
| 41 | first through hole | 42 | radiator connecting hole |
| 43 | second through hole | 45 | radiator guide hole |
| 5 | screw | 6 | support |

### DETAILED DESCRIPTION OF THE EMBODIMENTS

The specific implementation modes of the present invention are described in detail according to the accompanying drawings. It should be understood that the specific implementation modes described herein are only used to illustrate and interpret the present invention, but not to limit the present invention.

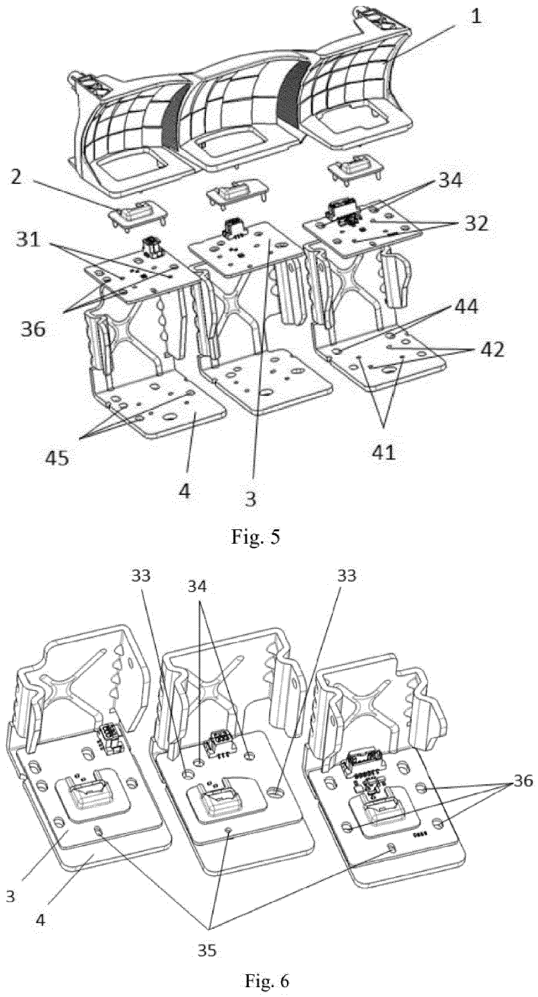

The orientation or position relation indicated by the terms of "upper", "lower", "front", "rear", "left", "right" and the like is based on the orientation or position relation shown in the Fig. 5, namely, the orientation or position relation is the same as the up, down, front, rear, left and right directions of the vehicle lamp module in the using state. The orientation or position relation is only for the convenience of describing the present invention and simplifying the description, and does not indicate or imply that referred devices or elements must have a specific orientation, be constructed and operated in a specific orientation, and therefore cannot be understood as a limitation to the present invention.

Furthermore, the terms "first", "second" are only used for the purpose of description, but not understood to indicate or imply relative importance or implicitly indicate the number of technical features indicated, so that features defined with "first", "second" may explicitly or implicitly include one or more of the features.

In the description of the invention, it should be noted that, the term "installation" and "connection" should be subjected to generalized understanding unless specific regulations and limits are provided, for example, the term "connection" can be fixed connection, detachable connection or integrated connection; the two elements can be directly connected or indirectly connected through an intermediate medium, and the two elements can be internally communicated or interacted with each other. For those skilled in the art, the specific meanings of the terms in the invention can be understood according to specific conditions.

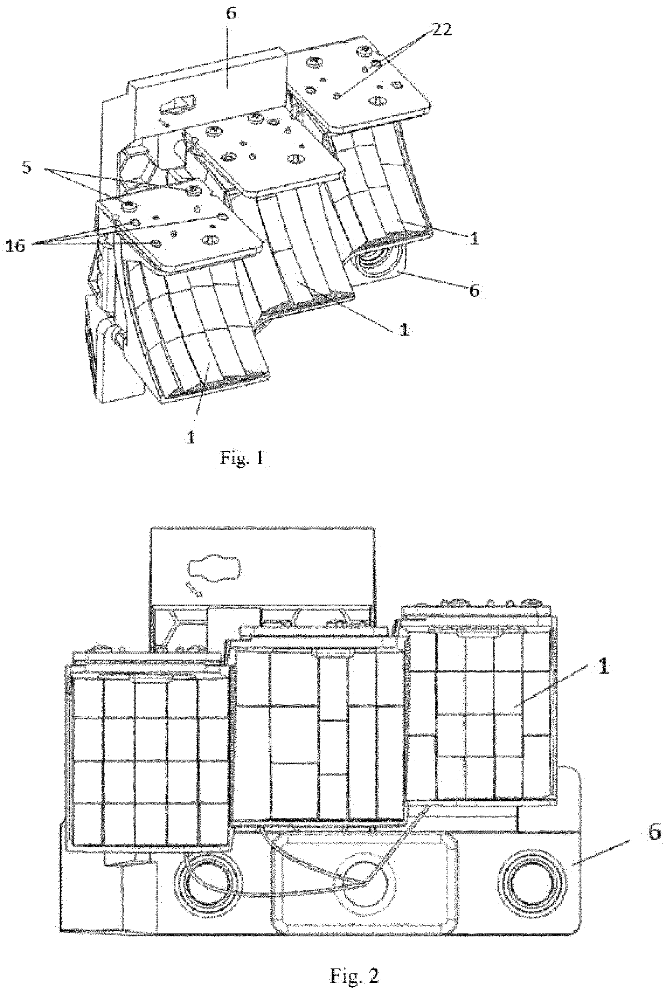

As shown in Fig. 1-Fig. 5, the vehicle lamp module includes a radiator 4, a circuit board 3, at least one reflector 1 and light shields 2 in one-to-one correspondence with the reflectors 1, due to the fact that part of direct light emitted by a light source may cause dazzling to pedestrians or oncoming vehicle drivers, in order to avoid dazzling and avoid traffic accidents, the light shields 2 are arranged. The light shields 2 are arranged near the light source, so they can block part of the direct light propagating towards a lens, and can also block scattered or diffused light from the light source from being projected towards a specific area of the reflector, so that the expected light form pattern is limited, and unwanted light and glare outside the expected light form pattern are prevented. Due to the fact that the light shield 2 is close to the light source, in order to prolong the service life of the light shield 2, the light shield 2 is made of metal with high strength, and ADC12 (under Japanese standard, also known as 12 # aluminum material, which is an Al-Si-Cu alloy and a die-casting aluminum alloy) is preferably selected as the material of the light shield 2.

In order to improve the heat conduction performance of the radiator 4, the radiator 4 in the present invention is made of aluminum, compared with a radiator made of aluminum alloy in the prior art, the radiator 4 is high in heat conduction performance, but low in strength and prone to deformation, so that structures such as positioning plugs and riveting columns cannot be machined on the radiator 4, however the light shield 2 is made of a high-strength metal material, so positioning plugs and riveting columns can be arranged on the light shield 2.

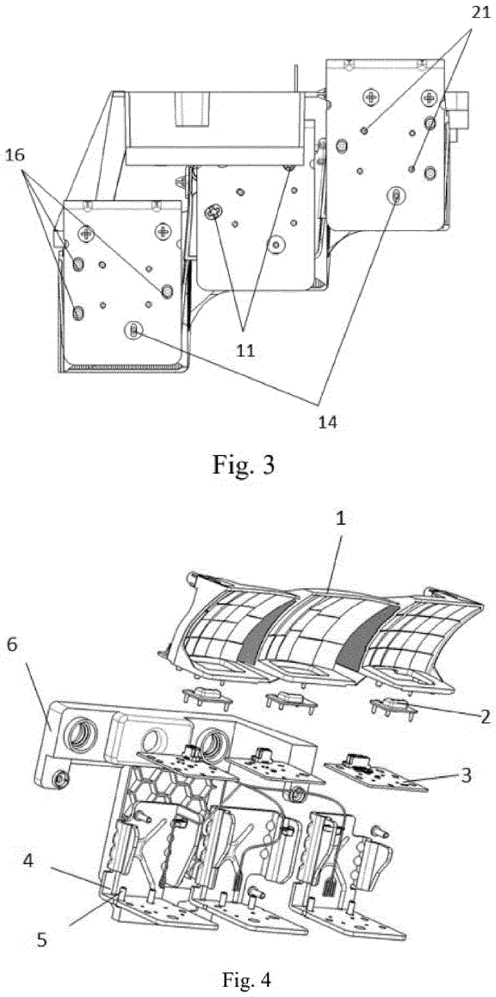

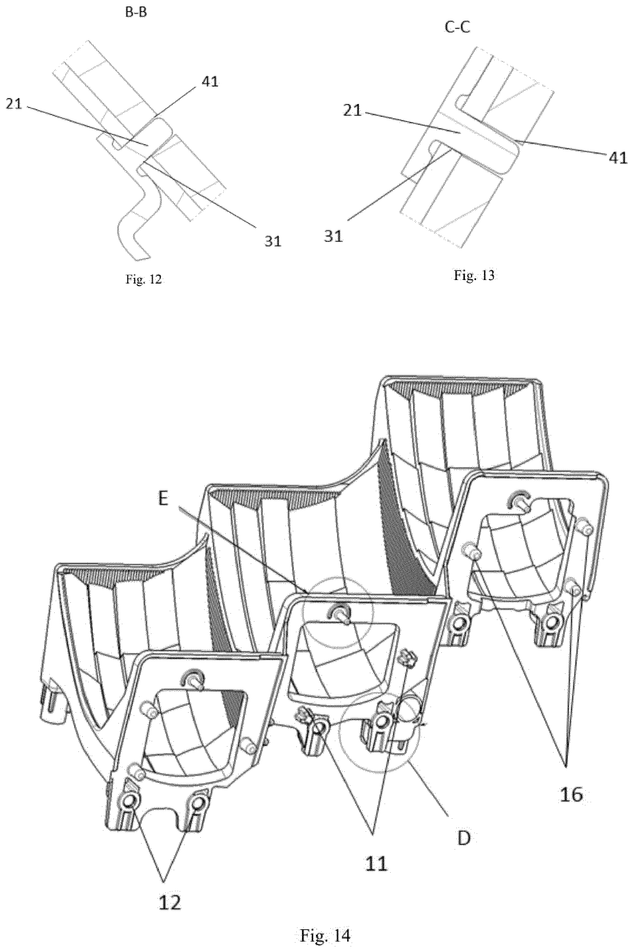

According to the selection of the materials of the above components, the technical solution adopts the following positioning structures and connecting structures:
A first positioning structure is arranged between the light shield 2 and the circuit board 3, so that direct positioning of the light shield 2 and the circuit board 3 is realized through the first positioning structure. The first positioning structure includes a plurality of light shield positioning plugs 21 arranged on the light shield 2 and light shield positioning sockets 31 which are arranged on the circuit board 3 and correspond to the light shield positioning plugs 21, and the light shield positioning plugs 21 can pass through the light shield positioning sockets 31 to accurately position the light shield 2 and the circuit board 3. As shown in Fig. 3 to Fig. 5 which illustrate a preferred implementation mode of the present invention, the number of the light shield positioning plugs 21 and the number of the light shield positioning sockets 31 are both two, and conventionally, in order to avoid over-positioning, one of the light shield positioning sockets 31 is a waist-shaped opening, the outer surface of the light shield positioning plug 21 corresponding to the waist-shaped opening is attached to the two inner side planes of the waist-shaped opening (as shown in the Fig. 13); and the another light shield positioning socket 31 is a round hole, and the outer surface of the light shield positioning plug 21 corresponding to the round hole is attached to the inner surface of the round hole (as shown in Fig. 12).

The light shield 2 and the circuit board 3 are directly positioned and do not need to be positioned with the radiator 4, but in order to facilitate processing and assembling, the radiator 4 corresponding to the circuit board 3 is provided with a first through hole 41 for the light shield positioning plug 21 to pass through, and the light shield positioning plug 21 is not in contact with the inner wall of the first through hole 41.

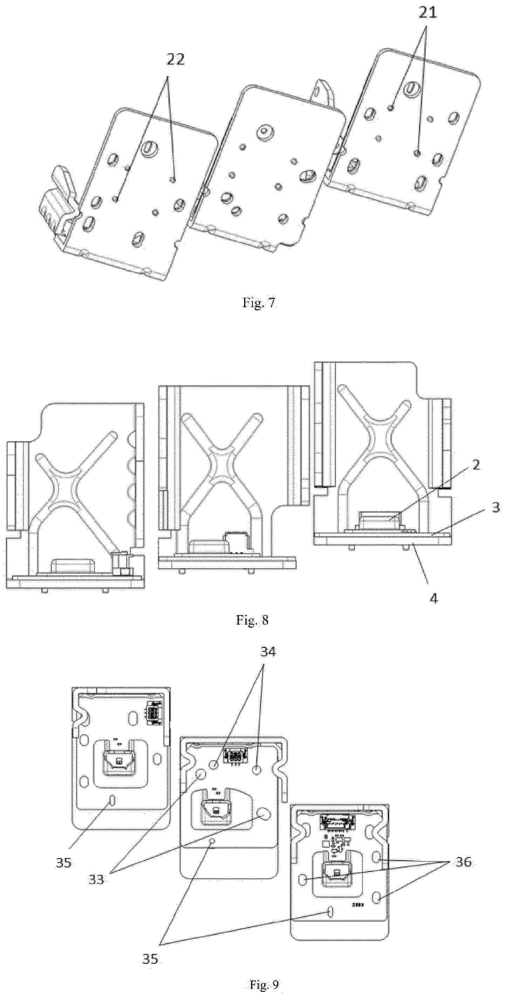

As shown in Fig. 3-Fig. 21, a second positioning structure is arranged between at least one reflector 1 and the circuit board 3, so that direct positioning of the reflector 1 and the circuit board 3 is realized through the second positioning structure. The second positioning structure includes a plurality of reflector positioning plugs 11 arranged on the reflector 1 and reflector positioning sockets 33 which are arranged on the circuit board 3 and correspond to the reflector positioning plugs 11, and the reflector positioning plugs 11 can pass through the reflector positioning sockets 33 to accurately position the reflector 1 and the circuit board 3. As a preferred mode of the present invention, the number of the reflector positioning plugs 11 and the number of the reflector positioning sockets 33 are respectively two. Similarly, in order to avoid over-positioning, one of the two reflector positioning sockets 33 is a waist-shaped opening, and the outer surface of the reflector positioning plug 11 corresponding to the kidney-shaped opening is attached to the two inner side planes of the waist-shaped opening; the another reflector positioning socket 33 is a round hole, and the outer surface of the reflector positioning plug 11 corresponding to the round hole is attached to the inner surface of the round hole.

The reflector 1 and the circuit board 3 are directly positioned and do not need to be positioned with the radiator 4, but in order to facilitate processing and assembling, the radiator 4 corresponding to the circuit board 3 is provided with a second through hole 43 for the reflector positioning plug 11 to pass through, and the reflector positioning plug 11 is not in contact with the inner wall of the second through hole 43.

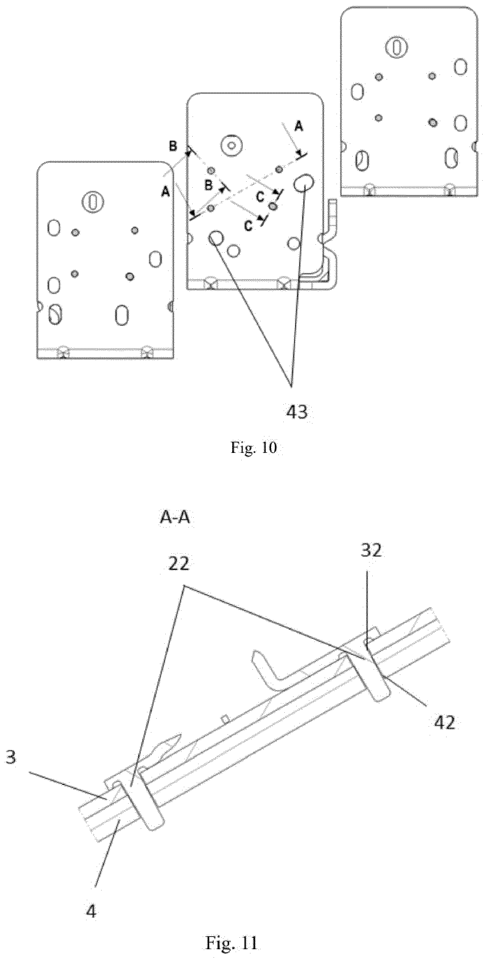

According to one implementation mode of the present invention, the light shield 2, the circuit board 3 and the radiator 4 are connected through the following structure: the light shield 2 is provided with at least one light shield riveting column 22, and the circuit board 3 is provided with circuit board connecting holes 32 corresponding to the light shield riveting columns 22; the radiator 4 corresponding to the circuit board 3 is provided with radiator connecting holes 42 corresponding to the light shield riveting columns 22, and the light shield riveting columns 22 sequentially penetrate through the circuit board connecting holes 32 and the radiator connecting holes 42 to rivet the light shield 2, the circuit board 3 and the radiator 4. As shown in the Fig. 11, the number of the light shield riveting columns 22, the number of the circuit board connecting holes 32 and the number of the radiator connecting holes 42 are all two, the light shield riveting columns 22 can sequentially pass through the circuit board connecting holes 32 and the radiator connecting holes 42 so as to rivet the light shield 2, the circuit board 3 and the radiator 4, and due to the fact that the light shield riveting columns 22 and the light shield 2 are made of the same material and are both metal pieces, the riveting of the light shield riveting columns 22 with the circuit board 3 and the radiator 4 is cold riveting. In order to improve the thermal durability of the vehicle lamp module, as shown in the Fig. 11, gaps for the light shield riveting columns 22 to move in the connecting holes exist between the outer surfaces of the light shield riveting columns 22 and the inner surfaces of the circuit board connecting holes 32 and the radiator connecting holes 42.

Preferably, the light shield positioning plug 21 and the light shield riveting column 22 are made of metal materials and are good in heat conduction performance, and heat conduction glue can be arranged between the light shield positioning plug 21 and the light shield riveting column 22 and the circuit board 3 to achieve heat conduction and improve heat dissipation efficiency.

As one implementation mode of the present invention, the reflector 1, the circuit board 3 and the radiator 4 are connected through the following structure: the reflector 1 is provided with mounting holes 12, the circuit board 3 and the corresponding radiator 4 are respectively provided with via holes 34 and via hole 44, then the via holes 34 and the via holes 44 connect with the mounting holes 12 through fasteners such as screws 5 or bolts, so that the radiator 4, the circuit board 3 and the reflector 1 are fixedly connected. When a screw 5 is used for connection, the mounting hole 12 is a threaded hole matched with the screw 5.

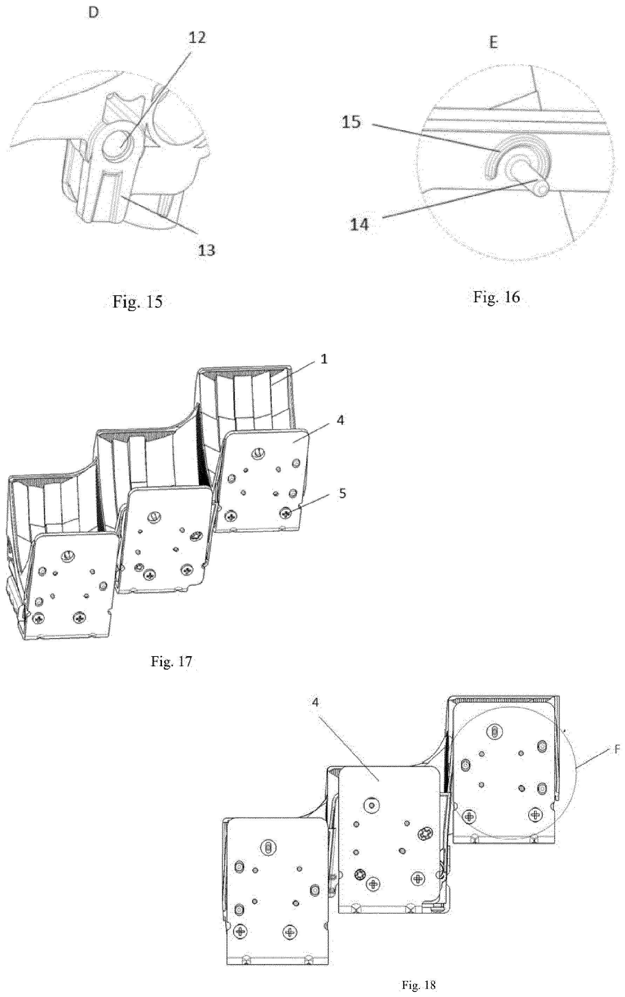

As shown in Fig. 14, as the mounting hole 12 in the reflector 1 is arranged in the rear end of the reflector 1, after a screw 5 or a bolt is screwed down, the front end of the reflector 1 tends to tilt upwards due to the fact that the rear end of the reflector 1 is stressed, namely, the reflector 1 will overturn backwards, and as an improvement mode, as shown in Fig. 15, in order to inhibit the reflector 1 from overturning backwards, a first convex rib 13 protruding out of the lower surface of the reflector 1 is arranged on the periphery of the mounting hole 12, the first convex rib 13 is in contact with the upper surface of the circuit board 3, and when the reflector 1 overturns backwards, the first convex rib 13 can inhibit the reflector 1 from overturning backwards. As another improvement mode, the front end of the reflector 1 can be riveted with the front end of the circuit board 3, specifically, the lower surface of the reflector 1 is provided with a reflector riveting column 14, the circuit board 3 is provided with a riveting hole 35 matched with the reflector riveting column 14, and backward overturning of the reflector 1 can be inhibited by hot riveting between the front end of the reflector 1 and the circuit board 3.

However, after the front end of the reflector 1 is riveted with the circuit board 3, as the front end of the reflector 1 is stressed, the rear end of the reflector 1 tends to tilt upwards, namely, the reflector 1 can overturn forwards, in order to inhibit the reflector 1 from overturning forwards, as shown in the Fig. 16, a second convex rib 15 is arranged on the periphery of the reflector riveting column 14; and the second convex rib 15 is in contact with the upper surface of the circuit board 3, and when the reflector 1 overturns forwards, the second convex rib 15 can inhibit the reflector 1 from overturning forwards.

The lower surfaces of the first convex rib 13 and the second convex rib 15 are also positioning surfaces of the reflector 1 in the up-and-down direction.

A plurality of reflectors 1 can be arranged and used for forming a plurality of light forms, the plurality of light forms can be overlapped to form a complete vehicle lamp light form, and in the light distribution process, the relative positions of the plurality of light forms need to be adjusted firstly, and then the position of the whole vehicle lamp light form needs to be adjusted. Wherein, the relative positions of the plurality of light forms can be adjusted by adjusting the position of the reflector 1 relative to the light source on the circuit board 3.

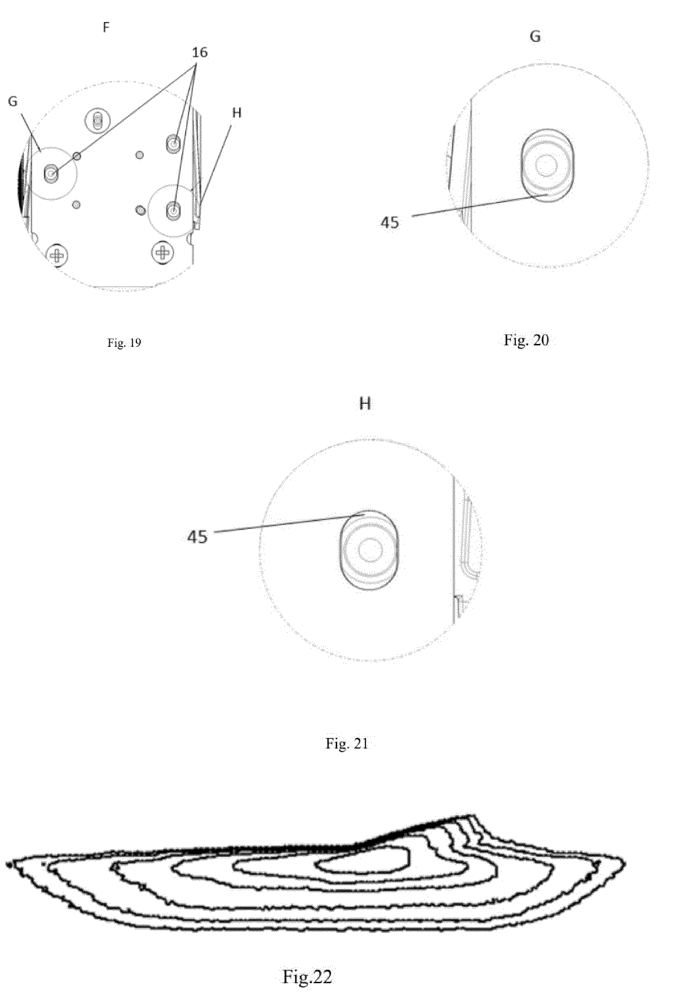

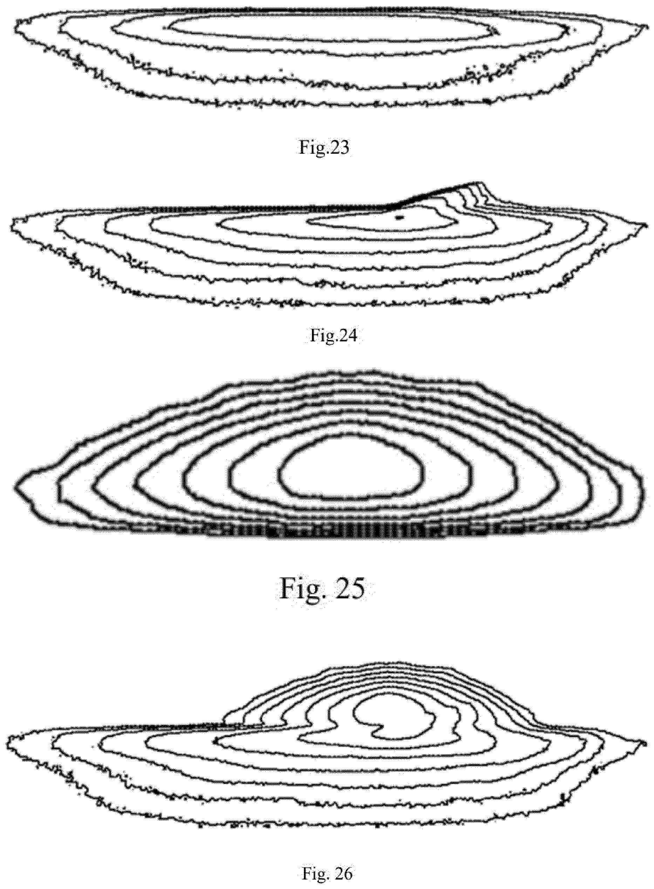

The high-low-beam integrated vehicle lamp module with three reflectors 1 is taken as an example, the three reflectors 1 are a main low-beam reflector, an auxiliary low-beam reflector and a high-beam reflector, and the three reflectors 1 are correspondingly used for forming a main low-beam light form (shown in the Fig. 22), an auxiliary low-beam light form (shown in the Fig. 23) and a high-beam light form (shown in the Fig. 25) respectively. The main low-beam light form and the auxiliary low-beam light form are overlapped to form a complete low-beam light form (shown in Fig. 24). The positions of the three reflectors 1 can be set at will, and the auxiliary low-beam reflector and the high-beam reflector shown in the Fig. 1 are located on the left side and the right side of the main low-beam reflector respectively. In order to improve the illuminance of the main low-beam area, the light-emitting area of the light source corresponding to the main low-beam reflector is smaller than that of the light sources corresponding to the other two reflectors, and the light-emitting area of the light source corresponding to the main low-beam reflector is smaller than or equal to 0.5 mm².

When the reflective vehicle lamp module is assembled, in order to align a cut-off line of the main low-beam light form with a cut-off line of the auxiliary low-beam light form and enable the relative position between the main low-beam light form and the high-beam light form to be accurate, the relative position of each light form needs to be adjusted, namely, so-called dimming, so that the relative position of each light form conforms to laws and regulations, and the light form effect is ensured. In the dimming process, one light form needs to serve as a reference light form to adjust the positions of the other two light forms relative to the reference light form, for example, the main low-beam light form serves as the reference light form, namely, the main low-beam light reflector and the circuit board 3 are accurately positioned, the second positioning structure is arranged between the main low-beam reflector and the circuit board 3 corresponding to the main low-beam reflector. Dimming structures capable of enabling the auxiliary low-beam reflector and the high-beam reflector to move relative to the corresponding circuit boards 3 are arranged between the auxiliary low-beam reflector and the corresponding circuit board 3 and between the high-beam reflector and the corresponding circuit board 3.

In the vehicle lamp module provided by the embodiment of the present invention, the relative movement of the reflector 1 and the corresponding circuit board 3 can be realized by the following two structural forms:
According to a first structural form, a plurality of reflectors 1 are integrated pieces [firstly, PC (Polycarbonate), PMMA (polymethyl methacrylate) or BMC (bulk molding compound) is integrally formed, and then aluminum is plated on the surface of the reflector 1 serving as a reflecting surface to form the reflecting surface], and each reflector 1 corresponds to one circuit board 3 and one radiator 4; the circuit boards 3 corresponding to the auxiliary low-beam reflector and the high-beam reflector can move relative to the auxiliary low-beam reflector and the high-beam reflector, namely, the dimming structure can enable a small assembly arranged by fixedly connecting the light shield 2, the circuit board 3 and the radiator 4 to move relative to the reflector 1, so that the light source and the light shield 2 move relative to the reflector 1.

According to a second structural form, the circuit boards 3 and, optionally, the radiators 4 corresponding to the plurality of reflectors 1 are integrally formed, the plurality of reflectors 1 are mutually separated and independent, and the auxiliary low-beam reflector and the high-beam reflector can move relative to the corresponding circuit boards 3. The dimming structure can enable the reflector 1 to move relative to a small assembly arranged by fixedly connecting the light shield 2, the circuit board 3 and the radiator 4, so that the reflector 1 moves relative to the light source and the light shield 2.

The relative movement can be front-back movement or up-and-down movement or movement in other directions as long as the relative positions of the light forms can be adjusted.

As an implementation mode, the structure of the dimming structure is specifically explained in the first structural form, as shown in Fig. 18-Fig. 19, the main low-beam reflector is fixedly connected with the circuit board 3 and the radiator 4 by taking the main low-beam light form as a positioning reference, the reflector positioning plug 11 is arranged on the main low-beam reflector, and the reflector positioning socket 33 is arranged on the circuit board 3 corresponding to the main low-beam reflector, and the dimming structure includes at least one guide column 16 arranged on the left and right sides of the auxiliary low-beam reflector and the high-beam reflector respectively and circuit board guide holes 36 which are arranged in the circuit board 3 and correspond to the guide columns 16. The circuit board guide hole 36 extends in the front-back direction of the circuit board 3. The guide column 16 can move in the front-back direction along the circuit board guide hole 36 so as to achieve the relative position of a small assembly formed by the light shield 2, the circuit board 3 and the radiator 4 corresponding to the auxiliary low-beam reflector and the high-beam reflector relative to the auxiliary low-beam reflector and the high-beam reflector in the front-back direction, namely the positions of the light source and the reflector 1 in the front-back direction can be achieved, and finally, the relative positions of the auxiliary low-beam light form and the high-beam light form relative to the main low-beam light form in the up-and-down direction are adjusted.

Meanwhile, the guide columns 16 and the circuit board guide holes 36 also serve as limiting structures of a small assembly in the left-right direction, the small assembly is formed by the light shield 2, the circuit board 3 and the radiator 4 corresponding to the auxiliary low-beam reflector and the high-beam reflector, and therefore the small assembly can only move in the front-back direction. Specifically, the outer side edge of the guide column 16 is in contact with the inner wall of the circuit board guide hole 36; the inner side edge of the guide column 16 is not in contact with the inner wall of the circuit board guide hole 36 (here, the inner side of the inner side edge refers to the direction pointing to the center of the auxiliary low-beam reflector or the high-beam reflector, and the outer side of the outer side edge refers to the direction away from the center thereof). As an implementation mode of the present invention, as shown in Fig. 20-Fig. 21, the right side edge of the guide column 16 located on the right side is attached to the right side edge of the corresponding circuit board guide hole 36, and a gap is arranged between the left side edge of this guide column 16 and the left side edge of the corresponding circuit board guide hole 36; the left side edge of the guide column 16 located on the left side is attached to the left side edge of the corresponding circuit board guide hole 36, and a gap is arranged between the right side edge of this guide column 16 and the right side edge of the corresponding circuit board guide hole 36.

If the left and right sides of the auxiliary low-beam reflector and the left and right sides of the high-beam reflector are each provided with one guide column 16, the guide columns 16 are cylinders, and the circuit board guide holes 36 are strip-shaped holes, when a special machine pushing mechanism is used for pushing the small assembly, due to the fact that the two guide columns 16 and the two circuit board guide holes 36 are in point contact, the small assembly is easy to rotate in the front-back moving process, so that the dimming is inaccurate; if the guide columns 16 are arranged to be strip-shaped columns, and the circuit board guide holes 36 are arranged to be strip-shaped holes, the guide columns 16 and the circuit board guide holes 36 are in line contact, the small assembly is prone to being stuck due to rotation in the front-back moving process. Therefore, as shown in the Fig. 18, as a preferable implementation mode, the guide columns 16 are cylinders, one guide column 16 is arranged on one side of the auxiliary low-beam reflector, two guide columns 16 are arranged on the other side of the auxiliary low-beam reflector, and the outer side edges of the two circuit board guide holes 36 corresponding to the two guide columns 16 located on the same side are located on the same straight line. One side of the high-beam reflector is provided with one guide column 16, the other side of the high-beam reflector is provided with two guide columns 16, and the outer side edges of the two circuit board guide holes 36 corresponding to the two guide columns 16 located on the same side are located on the same straight line. Due to the fact that the three guide columns 16 and the three circuit board guide holes 36 are in point contact, and the contact points of the two guide columns 16 are located on the same straight line, such a structure will not cause the small assembly rotate in the front-back moving process, nor will occur the stuck phenomenon.

Radiator guide holes 45 corresponding to the circuit board guide holes 36 are arranged in the radiators 4 corresponding to the auxiliary low-beam reflector and the high-beam reflector, and the guide columns 16 sequentially pass through the circuit board guide holes 36 and the radiator guide holes 45.

Due to the fact that the small assembly needs to move relative to the reflector 1 in the front-back direction, the via holes 34 and 44 in the circuit board 3 and the radiator 4 corresponding to the auxiliary low-beam reflector and the high-beam reflector and the riveting holes 35 in the circuit board 3 are strip-shaped holes extending front and back. When the dimming is complete, the small assembly and the reflector 1 are connected and fixed through a screw 5 or a bolt and are riveted through a reflector riveting column 14.

The vehicle lamp module further includes a support 6, and the reflector 1 is fixed to the support 6. After dimming of the relative positions of the light forms is finished, overall dimming can be performed on the reflective vehicle lamp module by adjusting the support 6, and the vehicle lamp light form shown in the Fig. 26 is made to be located at its theoretical position.

On the second aspect, the present invention further provides a vehicle lamp which includes the above vehicle lamp module.

On the third aspect, the present invention provides a vehicle with the above vehicle lamp.

According to the above description, the circuit board 3 is taken as a reference, the light shield 2 and the reflector 1 are respectively and directly positioned with the circuit board 3, accurate and good positioning among the vehicle lamp optical element systems composed of the circuit board 3, the light shield 2 and the reflector 1 is realized, the radiator 4 only plays a role in heat dissipation and does not play a role in positioning. Position errors caused by indirect positioning between the optical elements due to the fact that the radiator 4 serves as a positioning piece are avoided, the light form effect is guaranteed, and the module performance is improved. In order to be matched with a positioning structure, the light shield 2, the circuit board 3 and the radiator 4 are connected in a riveting mode, and reliable connection is guaranteed. The dimming structure is provided, the relative positions of the auxiliary low-beam light form and the high-beam light form relative to the main low-beam light form in the up-and-down direction can be adjusted, all the light forms meet the requirements of laws and regulations, and the light form effect is ensured; the material characteristic design of each part has a positioning structure different from that in the prior art, the light shield 2 is made of a high-strength metal material, so that the service life of the light shield 2 can be prolonged, structures such as a positioning plug and a riveting column can be arranged on the light shield 2, and the heat dissipation performance can be improved.

## Claims

1. A vehicle lamp module, comprising a plurality of reflectors (1), a plurality of circuit boards (3) which are in one-to-one correspondence with the reflectors (1) and light shields (2) in one-to-one correspondence with the reflectors (1),
**characterized in that**,
a plurality of light shield positioning plugs (21) are arranged on the light shield (2), and light shield positioning sockets (31) corresponding to the light shield positioning plugs (21) are arranged in the circuit board (3) to realize direct positioning of the light shield (2) and the circuit board (3); one of the reflectors (1) is provided with a plurality of reflector positioning plugs (11), and the circuit board (3) corresponding to this reflector (1) is provided with reflector positioning sockets (33) corresponding to the reflector positioning plugs (11) to realize direct positioning of the reflector (1) and the circuit board (3); and dimming structures enabling the other reflectors (1) to move relative to the other corresponding circuit boards (3) are arranged between said other reflectors (1) and their corresponding circuit boards (3) in order to adjust the light distributions in the up-and-down direction;
wherein either the plurality of reflectors (1) or the plurality of circuit boards (3) are integrally formed, wherein,
when the plurality of reflectors (1) are integrally formed, the plurality of circuit boards (3) are mutually separated and independent, and the dimming structure enables the said other corresponding circuit boards (3) to move relative to their corresponding reflectors (1);
when the plurality of circuit boards (3) are integrally formed, the plurality of reflectors (1) are mutually separated and independent, and the adjustment structure enables the said other reflector (1) to move relative to its corresponding circuit board (3).

2. The vehicle lamp module according to claim 1, **characterized in that** two light shield positioning plugs (21) are arranged on each light shield (2).

3. The vehicle lamp module according to claim 1, **characterized in that** first through holes (41) for the light shield positioning plugs (21) to pass through are arranged in a radiator (4) corresponding to the circuit board (3), and the light shield positioning plug (21) is not in contact with an inner wall of the first through hole (41); and / or
heat-conducting glue is arranged between the light shield positioning plug (21) and the circuit board (3).

4. The vehicle lamp module according to claim 1, **characterized in that** two reflector positioning plugs (11) are arranged on said one of the reflectors (1); and / or
second through holes (43) for the reflector positioning plugs (11) to pass through are arranged in the radiator (4) corresponding to the circuit board (3), and the reflector positioning plugs (11) are not in contact with an inner wall of the second through hole (43).

5. The vehicle lamp module according to claim 1, **characterized in that** the dimming structure comprises at least one guide column (16) arranged on a bottom face of each of the other reflectors (1) and circuit board guide holes (36) which are arranged in the corresponding circuit board (3) and correspond to the guide columns (16), and the circuit board guide holes (36) extend in the front-back direction of the circuit board (3).

6. The vehicle lamp module according to claim 5, **characterized in that** the outer side edge of the guide column (16) is in contact with the inner wall of the circuit board guide hole (36), and the inner side edge of the guide column (16) is not in contact with the inner wall of the circuit board guide hole (36).

7. The vehicle lamp module according to claim 5, **characterized in that** the guide columns (16) are cylinders, one guide column (16) is arranged on one side of each of the other reflectors (1), two guide columns (16) are arranged on the other side of each of the other reflectors (1), and the outer side edges of the two circuit board guide holes (36) corresponding to the two guide columns (16) located on the same side are located on the same straight line.

8. The vehicle lamp module according to claim 5, **characterized in that** radiator guide holes (45) corresponding to the circuit board guide holes (36) are arranged in the radiator (4) corresponding to the circuit board (3), and the guide columns (16) sequentially pass through the circuit board guide holes (36) and the radiator guide holes (45).

9. The vehicle lamp module according to any one of claims 1 to 4, **characterized in that** at least one light shield riveting column (22) is arranged on the light shield (2), circuit board connecting holes (32) corresponding to the light shield riveting columns (22) are arranged in the circuit board (3), radiator connecting holes (42) corresponding to the light shield riveting columns (22) are arranged in the radiator (4) corresponding to the circuit board (3), and the light shield riveting columns (22) sequentially pass through the circuit board connecting holes (32) and the radiator connecting holes (42) to rivet the light shield (2), the circuit board (3) and the radiator (4).

10. The vehicle lamp module according to claim 9, **characterized in that** heat-conducting glue is arranged between the light shield riveting column (22) and the circuit board (3).

11. The vehicle lamp module according to claim 9, **characterized in that** gaps allowing the light shield riveting columns (22) to move in the connecting holes exist between the outer surfaces of the light shield riveting columns (22) and the inner surfaces of the circuit board connecting holes (32) and the radiator connecting holes (42).

12. The vehicle lamp module according to any one of claims 1 to 4, **characterized in that** mounting holes (12) are arranged in the reflector (1), the circuit board (3) and the radiator (4) corresponding to the circuit board (3) are respectively provided with via holes (34,44), and the via holes (34, 44) are connected with the mounting holes (12) through fasteners to enable the fixed connection among the radiator (4), the circuit board (3) and the reflector (1).

13. The vehicle lamp module according to claim 12, **characterized in that** a first convex rib (13) protruding out of the lower surface of the reflector (1) is arranged on the periphery of the mounting hole (12), and the first convex rib (13) is in contact with the upper surface of the circuit board (3).

14. The vehicle lamp module according to claim 12, **characterized in that** a reflector riveting column (14) is arranged on the lower surface of the reflector (1), and a riveting hole (35) matched with the reflector riveting column (14) is arranged in the circuit board (3);
Preferably, a second convex rib (15) is arranged on the periphery of the reflector riveting column (14), and the second convex rib (15) is in contact with the upper surface of the circuit board (3).

15. A vehicle lamp, **characterized by** comprising the vehicle lamp module according to any one of claims 1 to 14.

## Patentansprüche

1. Fahrzeuglampenmodul, das eine Vielzahl von Reflektoren (1), eine Vielzahl von Leiterplatten (3), die in eins-zu-eins-Entsprechung mit den Reflektoren (1) stehen, und Lichtabschirmungen (2) in eins-zu-eins-Entsprechung mit den Reflektoren (1) umfasst,
**dadurch gekennzeichnet, dass**
eine Vielzahl von Lichtschirm-Positionierungssteckern (21) auf dem Lichtschirm (2) angeordnet sind, und Lichtschirm-Positionierungsbuchsen (31), die den Lichtschirm-Positionierungssteckern (21) entsprechen, in der Leiterplatte (3) angeordnet sind, um eine direkte Positionierung des Lichtschirms (2) und der Leiterplatte (3) zu realisieren; einer der Reflektoren (1) mit einer Vielzahl von Reflektorpositionierungssteckern (11) versehen ist und die diesem Reflektor (1) entsprechende Leiterplatte (3) mit Reflektorpositionierungsbuchsen (33) versehen ist, die den Reflektorpositionierungssteckern (11) entsprechen, um eine direkte Positionierung des Reflektors (1) und der Leiterplatte (3) zu realisieren; und Dimmstrukturen, die es den anderen Reflektoren (1) ermöglichen, sich relativ zu den anderen entsprechenden Leiterplatten (3) zu bewegen, zwischen den anderen Reflektoren (1) und ihren entsprechenden Leiterplatten (3) angeordnet sind, um die Lichtverteilungen in der Auf- und Abwärtsrichtung einzustellen;
wobei entweder die Mehrzahl der Reflektoren (1) oder die Mehrzahl der Leiterplatten (3) einstückig ausgebildet sind, wobei,
wenn die mehreren Leiterplatten (3) einstückig ausgebildet sind, die mehreren Reflektoren (1) voneinander getrennt und unabhängig sind und die Abblendstruktur es den anderen entsprechenden Leiterplatten (3) ermöglicht, sich relativ zu ihren entsprechenden Reflektoren (1) zu bewegen;
wenn die mehreren Reflektoren (1) voneinander getrennt und unabhängig sind, die mehreren Leiterplatten (3) einstückig ausgebildet sind und die Einstellstruktur eine Bewegung des anderen Reflektors (1) relativ zu seiner entsprechenden Leiterplatte (3) ermöglicht.

2. Fahrzeuglampenmodul nach Anspruch 1, **dadurch gekennzeichnet, dass** an jeder Lichtblende (2) zwei Lichtblenden-Positionierstecker (21) angeordnet sind.

3. Fahrzeuglampenmodul nach Anspruch 1, **dadurch gekennzeichnet, dass** erste Durchgangslöcher (41) zum Durchführen der Lichtabschirmungs-Positionierungsstecker (21) in einem Kühler (4) angeordnet sind, der der Leiterplatte (3) entspricht, und der Lichtabschirmungs-Positionierungsstecker (21) nicht in Kontakt mit einer Innenwand des ersten Durchgangslochs (41) ist; und / oder
der wärmeleitende Klebstoff zwischen dem Lichtschutz-Positionierungsstecker (21) und der Leiterplatte (3) angeordnet ist.

4. Fahrzeuglampenmodul nach Anspruch 1, **dadurch gekennzeichnet, dass** an einem der Reflektoren (1) zwei Reflektor-Positionierstecker (11) angeordnet sind; und / oder
zweite Durchgangslöcher (43) für den Durchgang der Reflektor-Positionierungsstecker (11) in dem der Leiterplatte (3) entsprechenden Kühler (4) angeordnet sind und die Reflektor-Positionierungsstecker (11) nicht in Kontakt mit einer Innenwand des zweiten Durchgangslochs (43) sind.

5. Fahrzeuglampenmodul nach Anspruch 1, **dadurch gekennzeichnet, dass** die Abblendstruktur mindestens eine an einer Unterseite jedes der anderen Reflektoren (1) angeordnete Führungssäule (16) und in der entsprechenden Leiterplatte (3) angeordnete, mit den Führungssäulen (16) korrespondierende Leiterplatten-Führungslöcher (36) umfasst und sich die Leiterplatten-Führungslöcher (36) in Vor-Rück-Richtung der Leiterplatte (3) erstrecken.

6. Fahrzeuglampenmodul nach Anspruch 5, **dadurch gekennzeichnet, dass** die äußere Seitenkante der Führungssäule (16) in Kontakt mit der Innenwand des Leiterplatten-Führungslochs (36) ist und die innere Seitenkante der Führungssäule (16) nicht in Kontakt mit der Innenwand des Leiterplatten-Führungslochs (36) ist.

7. Fahrzeuglampenmodul nach Anspruch 5, **dadurch gekennzeichnet, dass** die Führungssäulen (16) zylinderförmig sind, eine Führungssäule (16) auf einer Seite jedes der anderen Reflektoren (1) angeordnet ist, zwei Führungssäulen (16) auf der anderen Seite jedes der anderen Reflektoren (1) angeordnet sind und die äußeren Seitenkanten der beiden Leiterplatten-Führungslöcher (36), die den beiden auf derselben Seite befindlichen Führungssäulen (16) entsprechen, auf derselben Geraden liegen.

8. Fahrzeuglampenmodul nach Anspruch 5, **dadurch gekennzeichnet, dass** den Leiterplatten-Führungslöchern (36) entsprechende Kühler-Führungslöcher (45) in dem der Leiterplatte (3) entsprechenden Kühler (4) angeordnet sind und die Führungssäulen (16) nacheinander durch die Leiterplatten-Führungslöcher (36) und die Kühler-Führungslöcher (45) geführt werden.

9. Fahrzeuglampenmodul nach einem der Ansprüche 1 bis 4, **dadurch gekennzeichnet, dass** an der Lichtscheibe (2) mindestens eine Lichtscheiben-Nietsäule (22) angeordnet ist, in der Leiterplatte (3) Leiterplattenverbindungslöcher (32), die zu den Lichtscheiben-Nietsäulen (22) korrespondieren, angeordnet sind, Heizkörperverbindungslöcher (42), die den Lichtblendennietsäulen (22) entsprechen, in dem Heizkörper (4) angeordnet sind, der der Leiterplatte (3) entspricht, und die Lichtblendennietsäulen (22) nacheinander durch die Leiterplattenverbindungslöcher (32) und die Heizkörperverbindungslöcher (42) geführt werden, um die Lichtblende (2), die Leiterplatte (3) und den Heizkörper (4) zu vernieten.

10. Fahrzeuglampenmodul nach Anspruch 9, **dadurch gekennzeichnet, dass** zwischen der Lichtblendennietsäule (22) und der Leiterplatte (3) wärmeleitender Klebstoff angeordnet ist.

11. Fahrzeuglampenmodul nach Anspruch 9, **dadurch gekennzeichnet, dass** zwischen den Außenflächen der Lichtblendennietsäulen (22) und den Innenflächen der Leiterplattenverbindungslöcher (32) und der Kühlerverbindungslöcher (42) Spalte vorhanden sind, die es den Lichtblendennietsäulen (22) ermöglichen, sich in den Verbindungslöchern zu bewegen.

12. Fahrzeuglampenmodul nach einem der Ansprüche 1 bis 4, **dadurch gekennzeichnet, dass** Befestigungslöcher (12) im Reflektor (1) angeordnet sind, die Leiterplatte (3) und der mit der Leiterplatte (3) korrespondierende Kühler (4) jeweils mit Durchgangslöchern (34, 44) versehen sind, und die Durchgangslöcher (34, 44) mit den Befestigungslöchern (12) durch Befestigungsmittel verbunden sind, um die feste Verbindung zwischen dem Kühler (4), der Leiterplatte (3) und dem Reflektor (1) zu ermöglichen.

13. Fahrzeuglampenmodul nach Anspruch 12, **dadurch gekennzeichnet, dass** am Umfang des Befestigungslochs (12) eine erste konvexe Rippe (13) angeordnet ist, die aus der Unterseite des Reflektors (1) herausragt, und dass die erste konvexe Rippe (13) mit der Oberseite der Leiterplatte (3) in Kontakt ist.

14. Fahrzeuglampenmodul nach Anspruch 12, **dadurch gekennzeichnet, dass** an der Unterseite des Reflektors (1) eine Reflektornietsäule (14) und in der Leiterplatte (3) ein auf die Reflektornietsäule (14) abgestimmtes Nietloch (35) angeordnet ist;
Vorzugsweise ist eine zweite konvexe Rippe (15) am Umfang der Reflektornietsäule (14) angeordnet, und die zweite konvexe Rippe (15) steht in Kontakt mit der Oberseite der Leiterplatte (3).

15. Fahrzeugleuchte, **dadurch gekennzeichnet, dass** sie das Fahrzeuglampenmodul nach einem der Ansprüche 1 bis 14 umfasst.

## Revendications

1. Module de lampe de véhicule, comprenant plusieurs réflecteurs (1), plusieurs cartes de circuit imprimé (3) qui sont en correspondance biunivoque avec les réflecteurs (1), et plusieurs pares-lumière (2) qui sont en correspondance biunivoque avec les réflecteurs (1),
**caractérisé en ce que**
plusieurs fiches de positionnement de pare-lumière (21) sont disposées sur le pare-lumière (2), et des prises de positionnement de pare-lumière (31) correspondant aux fiches de positionnement de pare-lumière (21) sont disposées dans la carte de circuit imprimé (3), pour réaliser un positionnement direct du pare-lumière (2) et de la carte de circuit imprimé (3), l'un des réflecteurs (1) étant pourvu de plusieurs fiches de positionnement de réflecteur (11), et la carte de circuit imprimé (3) correspondant à ce réflecteur (1) étant pourvue de prises de positionnement de réflecteur (33) correspondant aux fiches de positionnement de réflecteur (11) pour réaliser un positionnement direct du réflecteur (1) et de la carte de circuit imprimé (3), des structures de gradation permettant aux autres réflecteurs (1) de se déplacer par rapport aux autres cartes de circuit imprimé correspondantes (3) étant disposées entre lesdits autres réflecteurs (1) et leurs cartes de circuit imprimé correspondantes (3) afin de régler les distributions de lumière en direction vers le haut et le bas,
soit les plusieurs réflecteurs (1) soit les plusieurs cartes de circuit imprimé (3) étant formées d'un seul tenant,
les plusieurs cartes de circuit imprimé (3) étant mutuellement séparées et indépendantes lorsque les plusieurs réflecteurs (1) sont formés d'un seul tenant, la structure de gradation permettant auxdites autres cartes de circuit imprimé correspondantes (3) de se déplacer par rapport à leurs réflecteurs correspondants (1),
les plusieurs réflecteurs (1) étant mutuellement séparés et indépendants lorsque les plusieurs cartes de circuit imprimé (3) sont formées d'un seul tenant, la structure de réglage permettant audit autre réflecteur (1) de se déplacer par rapport à sa carte de circuit imprimé correspondante (3).

2. Module de lampe de véhicule selon la revendication 1, **caractérisé en ce que** deux fiches de positionnement de pare-lumière (21) sont disposées sur chaque pare-lumière (2).

3. Module de lampe de véhicule selon la revendication 1, **caractérisé en ce que** des premiers trous traversants (41) pour le passage des fiches de positionnement de pare-lumière (21) sont disposés dans un radiateur (4) correspondant à la carte de circuit imprimé (3), la fiche de positionnement de pare-lumière (21) n'étant pas en contact avec une paroi intérieure du premier trou traversant (41), et / ou
de la colle thermoconductrice est disposée entre la fiche de positionnement de pare-lumière (21) et la carte de circuit imprimé (3).

4. Module de lampe de véhicule selon la revendication 1, **caractérisé en ce que** deux fiches de positionnement de réflecteur (11) sont disposées sur ledit un réflecteur (1), et / ou
des seconds trous traversants (43) pour le passage des fiches de positionnement de réflecteur (11) sont disposés dans le radiateur (4) correspondant à la carte de circuit imprimé (3), les fiches de positionnement de réflecteur (11) n'étant pas en contact avec une paroi intérieure du second trou traversant (43).

5. Module de lampe de véhicule selon la revendication 1, **caractérisé en ce que** la structure de gradation comprend au moins une colonne de guidage (16) disposée sur une face inférieure de chacun des autres réflecteurs (1) et des trous de guidage de carte de circuit imprimé (36) qui sont disposés dans la carte de circuit imprimé correspondante (3) et correspondent aux colonnes de guidage (16), les trous de guidage de carte de circuit imprimé (36) s'étendant en direction vers l'avant et l'arrière de la carte de circuit imprimé (3).

6. Module de lampe de véhicule selon la revendication 5, **caractérisé en ce que** le bord latéral extérieur de la colonne de guidage (16) est en contact avec la paroi intérieure du trou de guidage de carte de circuit imprimé (36), le bord latéral intérieur de la colonne de guidage (16) n'étant pas en contact avec la paroi intérieure du trou de guidage de carte de circuit imprimé (36).

7. Module de lampe de véhicule selon la revendication 5, **caractérisé en ce que** les colonnes de guidage (16) sont des cylindres, une colonne de guidage (16) étant disposée d'un côté de chacun des autres réflecteurs (1), deux colonnes de guidage (16) étant disposées de l'autre côté de chacun des autres réflecteurs (1), et les bords latéraux extérieurs des deux trous de guidage de carte de circuit imprimé (36) correspondant aux deux colonnes de guidage (16) situées du même côté étant situés sur la même ligne droite.

8. Module de lampe de véhicule selon la revendication 5, **caractérisé en ce que** des trous de guidage de radiateur (45) correspondant aux trous de guidage de carte de circuit imprimé (36) sont disposés dans le radiateur (4) correspondant à la carte de circuit imprimé (3), les colonnes de guidage (16) passant séquentiellement les trous de guidage de carte de circuit imprimé (36) et les trous de guidage de radiateur (45).

9. Module de lampe de véhicule selon l'une quelconque des revendications 1 à 4, **caractérisé en ce qu'**au moins une colonne de rivetage de pare-lumière (22) est disposée sur le pare-lumière (2), des trous de connexion de carte de circuit imprimé (32) correspondant aux colonnes de rivetage de pare-lumière (22) étant disposés dans la carte de circuit imprimé (3), des trous de connexion de radiateur (42) correspondant aux colonnes de rivetage de pare-lumière (22) étant disposés dans le radiateur (4) correspondant à la carte de circuit imprimé (3), et les colonnes de rivetage de pare-lumière (22) passant séquentiellement les trous de connexion de carte de circuit imprimé (32) et les trous de connexion de radiateur (42) pour riveter le pare-lumière (2), la carte de circuit imprimé (3) et le radiateur (4).

10. Module de lampe de véhicule selon la revendication 9, **caractérisé en ce que** de la colle thermoconductrice est disposée entre la colonne de rivetage de pare-lumière (22) et la carte de circuit imprimé (3).

11. Module de lampe de véhicule selon la revendication 9, **caractérisé en ce que** des fentes permettant aux colonnes de rivetage de pare-lumière (22) de se déplacer dans les trous de connexion existent entre les surfaces extérieures des colonnes de rivetage de pare-lumière (22) et les surfaces intérieures des trous de connexion de carte de circuit imprimé (32) et des trous de connexion de radiateur (42).

12. Module de lampe de véhicule selon l'une quelconque des revendications 1 à 4, **caractérisé en ce que** des trous de montage (12) sont disposés dans le réflecteur (1), la carte de circuit imprimé (3) et le radiateur (4) correspondant à la carte de circuit imprimé (3) étant respectivement pourvus de trous d'interconnexion (34, 44), les trous d'interconnexion (34, 44) étant reliés aux trous de montage (12) par des éléments de fixation pour permettre la connexion fixe entre le radiateur (4), la carte de circuit imprimé (3) et le réflecteur (1).

13. Module de lampe de véhicule selon la revendication 12, **caractérisé en ce qu'**une première nervure convexe (13) dépassant de la surface inférieure du réflecteur (1) est disposée sur la périphérie du trou de montage (12), la première nervure convexe (13) étant en contact avec la surface supérieure de la carte de circuit imprimé (3).

14. Module de lampe de véhicule selon la revendication 12, **caractérisé en ce qu'**une colonne de rivetage de réflecteur (14) est disposée sur la surface inférieure du réflecteur (1), un trou de rivetage (35) adapté à la colonne de rivetage de réflecteur (14) étant disposé dans la carte de circuit imprimé (3),
une seconde nervure convexe (15) étant de préférence disposée sur la périphérie de la colonne de rivetage de réflecteur (14), la seconde nervure convexe (15) étant en contact avec la surface supérieure de la carte de circuit imprimé (3).

15. Lampe de véhicule, **caractérisée en ce qu'**elle comprend le module de lampe de véhicule selon l'une quelconque des revendications 1 à 14.
